# EUROPEAN PATENT SPECIFICATION

(11) **EP 4 109 436 B1**
(45) Date of publication and mention of the grant of the patent: **20.12.2023**
(21) Application number: 22178873.0
(22) Date of filing: 14.06.2022
(51) Int. Cl.: A63F 3/00, A63H 33/04, A63H 33/26, A63F 3/04, G09B 5/02, G09B 7/02, A63F 9/24

(54) **ASSEMBLABLE MODULE FOR TOY ELECTRIC CIRCUITS**
ZUSAMMENSETZBARES MODUL FÜR ELEKTRISCHE SPIELZEUGSCHALTUNGEN
MODULE ASSEMBLABLE POUR CIRCUITS ÉLECTRIQUES DE JOUETS

(30) Priority: 22.06.2021 IT 202100016289
(43) Date of publication of application: 28.12.2022
(73) Proprietor: Clementoni S.P.A., 62019 Recanati (MC) (IT)
(72) Inventor: BURATTINI, Danilo, 60121 ANCONA (IT); RAGNETTI, Simone, 60122 ANCONA (IT)
(74) Representative: Baldi, Claudio

(56) References cited:
- EP-A1- 2 818 219
- WO-A1-2012/023935
- CN-A- 1 086 918
- US-A- 3 576 936
- US-A- 4 449 942

## Description

The present patent application for industrial invention relates to an assemblable module for toy electric circuits.

The field of reference in which the present invention is conceived is the field of children's board games, and particularly that of board games for building electric circuits.

As it is known, such games are currently composed of a series of electric modules that are pre-assembled during production, each electric module representing a specific circuit element that is typically present in an electric circuit, such as a resistor, a switch, a capacitor, a signaling device, and the like.

The game consists in connecting the various electric modules in a particular order in such a way to compose a plurality of working electric circuits.

Undoubtedly, such games can be considered more than just a "pastime" in view of their high educational and didactical value.

Indeed, it is believed that such games can stimulate the child's intuitive ability and curiosity about the world of science by offering him or her an educational, yet amusing way to approach the laws of physics.

It is also believed that such games can help children develop logical and sequential reasoning skills.

Currently, in such games, the various electric modules are pre-assembled during production by means of soldering and other manufacturing processes.

This has at least two disadvantages: one for the end users, that is to say children, and the other for the game manufacturers.

Firstly, the assembly of the electric modules during the manufacturing process unquestionably involves a greater complexity, with the inevitable consequence of higher production costs and longer production time.

Secondly, such a solution does not give the child the possibility to assemble the electric module himself or herself.

Thus, a twofold educational opportunity is lost with respect to the child; on the one hand, such a solution does not allow the child to become more aware of the electric operation of the various modules, and on the other hand, it limits his/her creativity.

US4449942A discloses a kit for the assembly of electric circuits comprising a module comprising a base, a cover that can be coupled with the base, and an electronic component mounted on the cover.

Conductive elements are formed inside the base, whereas conductive tracks are formed on the cover and are electrically connected to the electronic device mounted on the cover.

When the cover is mounted on the base, the conductive tracks formed on the cover are connected to the conductive elements formed inside the base.

Seats are formed on the base for electric connectors suitable for being electrically connected to the electric elements formed inside the base.

The module described in US4449942A is impaired by the fact that, in the event of damage to the conductive tracks of the cover or to the conductive elements of the base, it is necessary to dispose of the entire cover or of the entire base.

The purpose of the present invention is to overcome the drawbacks of the prior art by devising a versatile electric module that allows the child to develop his or her creativity.

Such a purpose is achieved in accordance with the invention with the features listed in the attached independent claim 1.

Advantageous embodiments appear from the dependent claims.

The assemblable module according to the invention is defined by claim 1.

For the sake of explanatory clarity, the description of the assemblable module according to the invention continues with reference to the attached drawings, which are for illustrative and non-limiting purposes only, wherein:
- Fig. 1 is an exploded axonometric view of the assemblable module;
- Fig. 2 is an axonometric sectional view of the assemblable module in assembled condition;
- Fig. 3 is an axonometric bottom view of the assemblable module wherein the base and the cover are disassembled from each other;
- Fig. 4 is an axonometric view of a game kit comprising a board and a plurality of modules connected to the board.

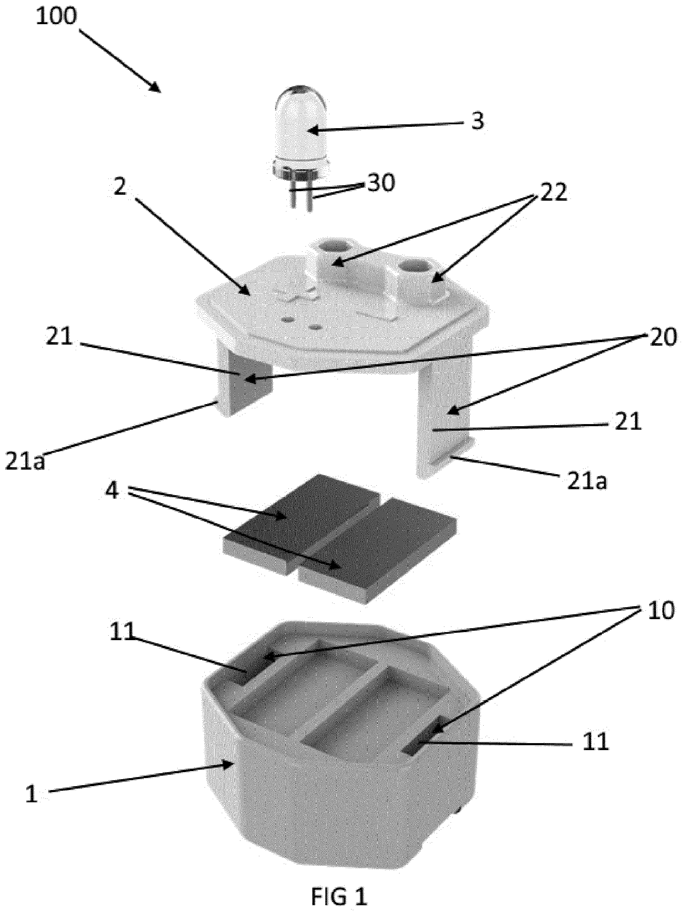

With reference to Figs. 1, 2 and 3, the assemblable module according to the invention is described, it being generally indicated with the reference number (100).

Referring to Fig. 1, the assemblable module (100) comprises a base (1), a cover (2) suitable for being mounted on the base (1), and two conductive plates (4) interposed between the base (1) and the cover (2) when the cover is connected to the base (1).

In a preferred embodiment of the invention, said base (1) has a hexagonal shape.

Although the base (1) has a hexagonal shape in the preferred embodiment shown in the appended figures, nothing would change if said base had a different shape, such as a rectangular or circular shape, and the like.

The base (1) comprises two seats (12) suitably configured to accommodate the conductive plates (4), which are removably mounted by the user on the seats (12) of the base (1) in such a way to be positioned and removed with respect to the base (1).

Advantageously, said conductive plates (4) can be attached inside said seats (12) using adhesive means, such as glue, adhesive tape or the like.

The assemblable module (100) also comprises an electronic component (3) with electric contacts (30) that can be connected to the conductive plates (4).

The electronic component (3) is removably mounted on the cover in such a way to be assembled and disassembled by the user. Specifically, the cover (2) comprises two through holes (25) into which the electric contacts (30) of the electric component (3) are inserted so that said electric contacts (30) go in contact with the conductive plates (4) disposed under the cover (2).

With reference to Figs. 1, 2 and 3, the electronic component (3) is a luminous signaling device; although not explicitly shown in said figures, the electronic component (3) may consist in a signaling device of a different type, such as of acoustic type, or even in a circuit element, such as a resistor, a switch, a transistor, an operational amplifier or a capacitor.

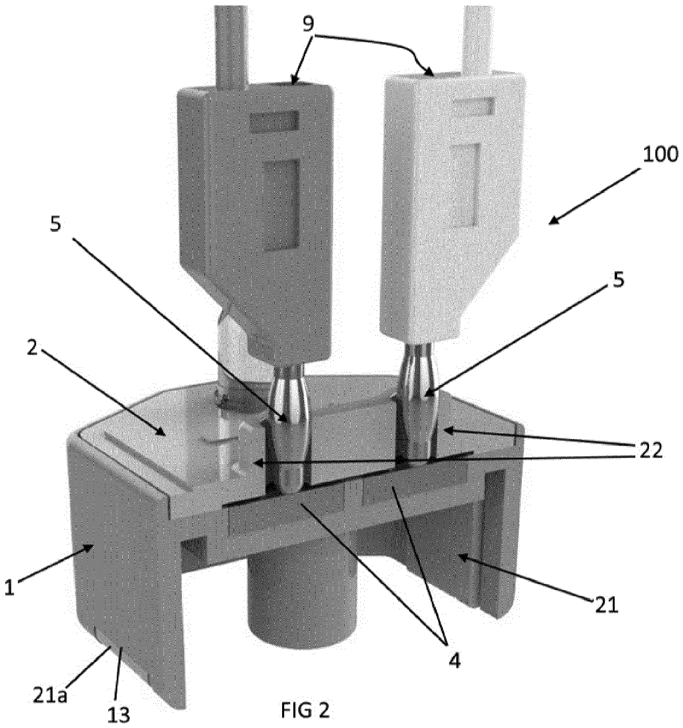

Referring to Fig. 2, the module (100) comprises two electric connectors (5) suitably configured to be electrically connected to the conductive plates (4) and connection means for connecting the electric connectors (5) to the cover (2). The electric connectors (5) are removably mounted on the cover (2) so that they can be positioned and removed with respect to the cover (2).

The electric connectors (5) are suitable for being connected to other modules and/or to a battery (8) so that the user can compose an electric circuit.

Referring to Fig. 1, 2 and 3, the cover comprises coupling means (20) suitable for being reversibly coupled with coupling means (10) of the base (1) so that the cover (2) can be assembled and disassembled by the user with respect to the base (1).

The coupling means (10) of the base (1) comprise at least one seat (11), whereas the coupling means (20) of the cover (2) comprise at least one side element (21) suitably configured to be removably inserted by the user into the seat (11) of the base (1).

In the preferred embodiment shown in Fig. 1, the coupling means (10) of the base (1) comprise two seats (11), whereas the coupling means (20) of the cover (2) comprise two side elements (21).

It should be noted that, although not shown in the appended figures, nothing would change if the coupling means (10) of the base (1) and the coupling means (20) of the cover (2) were inverted, that is to say, if the coupling means (10) of the base (1) comprised two side elements and the coupling means (20) of the cover (2) comprised two seats.

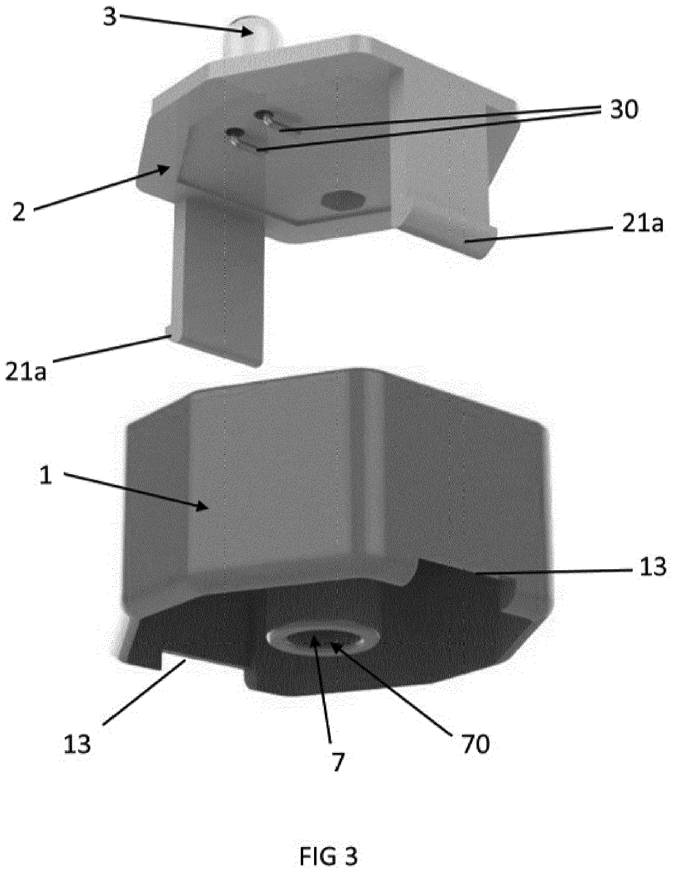

In the preferred embodiment shown in Fig. 3, each side element (21) comprises a retention tooth (21a), whereas the base (1) comprises a counter-surface (13) for each retention tooth (21a) against which the retention tooth (21a) is engaged, thus locking the side element (21) in the seat (11).

Although in the preferred embodiment shown in the appended figures the coupling means (10, 20) between the base (1) and the cover (2) are of elastic fit-in type, nothing would change if said coupling means (10, 20) were of a different type, such as of interlocking or threaded type.

With reference to Fig. 2, the cover (2) comprises two shanks (22), each one comprising a through hole to accommodate said electric connectors (5) so as to provide the electric contact between the electric connectors (5) and the conductive plates (4) under the cover (2).

Advantageously, said connection means may be arranged inside the shanks (22) and, by way of example, may consist in elastic bushings suitable for holding the electric connectors (5) in place so as to ensure a better contact between the electric connectors (5) and the conductive plates (4).

Operatively, the assembly method of an assemblable module comprises the following steps:
- disposing the conductive plates (4) inside the two seats (12) located on the base (1);
- inserting the electric contacts (30) of the electronic component (3) in the holes (25) formed on the cover (2) and bending the electric contacts (30) so that they are fixed to the cover (see Fig. 3);
- connecting the cover (2) to the base (1) by inserting the side elements (21) of the cover (2) inside the seats (11) of the base (1), thus placing the retention tooth (21a) of each side element (21) on the corresponding counter-surface (13) of the base (1), and locking the cover (2) onto the base (1); when the cover (2) is connected to the base (1), the electric contacts (30) of the electronic component (3) go in contact with the conductive plates (4); and
- inserting the two electric connectors (5) inside each hole formed on the corresponding shanks (22) so that the electric connectors (5) are electrically connected to said conductive plates (4).

As a result of the above description, the advantages of the assemblable module (100) according to the invention appear obvious, said assemblable module (100) being capable of reducing the production costs for the manufacturers and allowing the child to develop his or her creativity and manual dexterity.

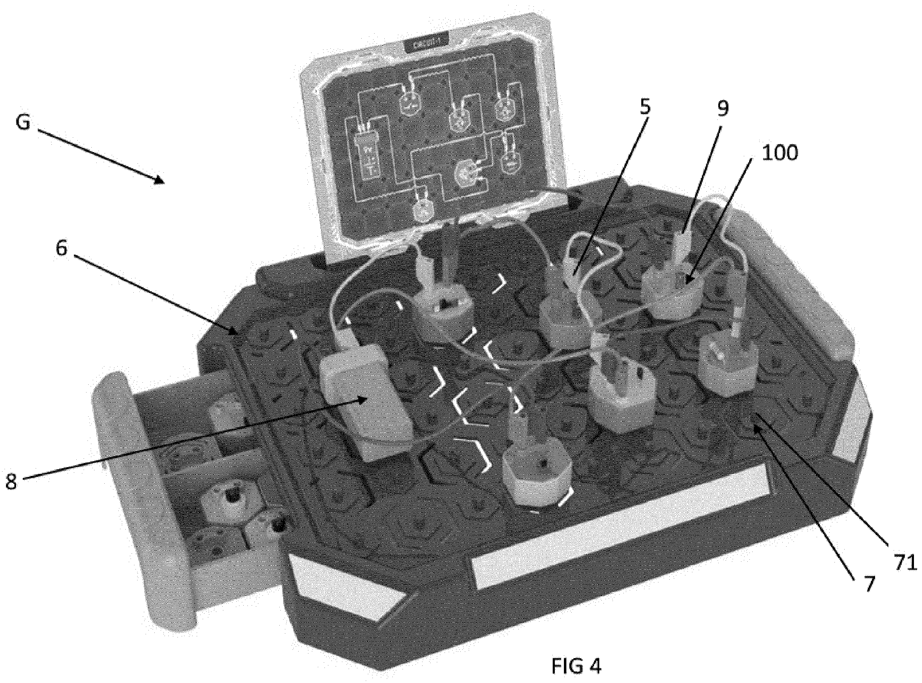

Referring to Fig. 4, a further object of the present invention consists of a game kit (G) comprising one or more modules (100) according to the invention and a board (6) on which the user can place the modules and connect them together so as to create an electric circuit.

The game kit (G) also comprises coupling means (7) between the modules (100) and the board (6). The coupling means (7) are used to attach each module (100) on the board (6) and comprise a hole (70) formed on the base (1) of each module (100), as shown in Fig. 3, and a plurality of pegs (71) located on the board (6), as shown in Fig. 4, each peg (71) being configured to fit into the hole (70) of the base (1) of a module (100).

Still with reference to Fig. 4, the game kit (G) comprises a battery (8) to which at least one module (100) is connected via the electric connectors (5), thus enabling the operation of the circuit created by the user.

The electric connectors (5) have two ends: a first end, which is inserted by the user in the through hole formed on the shank (22) of the cover (2) of a first module (100), and a second end, which is inserted in the through hole formed on the shank (22) of the cover (2) of a second module (100), thus allowing the connection between the two modules.

Each electric connector comprises a hole (9) disposed on an upper surface suitable for accommodating the end of another electric connector. It is evident that in this way a user or child can connect each module even with three or more modules.

Numerous variations and modifications of detail may be made to the present embodiment of the invention, within the reach of a person skilled in the art, but still within the scope of the invention as expressed by the appended claims.

## Claims

1. Assemblable module (100) for children's games comprising:
- a base (1);
- a cover (2) comprising coupling means (20) suitable for being reversibly coupled with coupling means (10) of said base (1), so that the cover (2) can be assembled and disassembled with respect to the base (1);
- two conductive plates (4) disposed between said base (1) and said cover (2) when the cover is connected to the base (1);
- an electronic component (3) having electric contacts (30) that can be connected to said conductive plates (4);
- two electric connectors (5) suitably configured to be electrically connected to said conductive plates; said electric connectors (5) being suitable for being connected to additional modules and/or to a battery (8);
**characterized in that**
said conductive plates (4) are removably mounted on said base (1) so that they can be positioned and removed with respect to the base (1); and
said electric connectors (5) are removably mounted on said cover (2) so that they can be positioned and removed with respect to the cover.

2. The module (100) of claim 1, wherein said electronic component (3) is removably mounted on said cover, in such a way to be assembled and disassembled with respect to the cover.

3. The module (100) of claim 1 or 2, wherein said base (1) comprises two seats (12) suitably configured to accommodate said conductive plates (4).

4. The module (100) according to any one of the preceding claims, wherein said coupling means (10, 20) between the base and the cover are of elastic fit-in type.

5. The module (100) according to claim 4, wherein said coupling means (10, 20) of the base (1) and of the cover (2) comprise at least one seat (11) and at least one side element (21), said side element (21) being suitably configured to be removably inserted in said seat (11).

6. The module (100) according to claim 5, wherein said side element (21) comprises a retention tooth (21a) suitably configured to retain the lateral element (21) to the seat (11); said base (1) comprising a counter-surface (13) against which said retention tooth (21a) is engaged.

7. The module (100) according to any one of the preceding claims, wherein said cover (2) comprises at least two shanks (22); each shank (20) comprising a through hole for housing said electric connectors (5).

8. The module (100) according to any of the preceding claims, wherein said cover (2) comprises two through holes (25) wherein the electric contacts (30) of the electric component (3) are inserted so that said electric contacts (30) go in contact with the conductive plates (4).

9. Assembling method of a module for children's games; said method comprising the following operating steps:
- providing a base (1), a cover (2), two conductive plates (4), an electronic component (3) and two electric connectors (5);
- Disposing the conductive plates (4) on the base (1);
- inserting the electric contacts (30) of the electronic component (3) in holes (25) formed on the cover (2);
- connecting the cover (2) to the base (1) so that the electric contacts (30) of the electronic component (3) go in contact with the conductive plates (4); and
- mounting the two electric connectors (5) on said cover (2) so that the electric connectors (5) are electrically connected to said conductive plates (4).

10. Game kit (G) comprising:
- at least one module (100) according to one of claims 1 to 8;
- a board (6);
- coupling means (7) between at least one module (100) and the board (6);
- a battery (8) connected to the electric connectors (5);

11. The game kit (G) of claim 10, wherein said coupling means (7) between at least one module (100) and the board (6) comprise:
- a hole (70) drilled on the base (1) of the module; and
- a peg (71) provided on the board (6) and configured in such a way to be inserted in the hole (70) of the base (1)

## Patentansprüche

1. Zusammenbaubares Modul (100) zum Spielen für Kinder, umfassend:
- eine Basis (1);
- einen Deckel (2), umfassend Kopplungsmittel (20), die dazu geeignet sind, auf reversible Weise mit Kopplungsmitteln (10) der Basis (1) so gekoppelt zu werden, dass der Deckel (2) in Bezug auf die Basis (1) montiert und demontiert werden kann;
- zwei leitfähige Platten (4), die zwischen der Basis (1) und dem Deckel (2) angeordnet sind, wenn der Deckel mit der Basis (1) verbunden ist;
- eine elektronische Komponente (3) mit elektrischen Kontakten (30), die mit den leitfähigen Platten (4) verbindbar sind;
- zwei elektrische Verbinder (5), die dazu bestimmt sind, mit den leitfähigen Platten (4) elektrisch verbunden zu werden; wobei die elektrischen Verbinder (5) dazu geeignet sind, mit anderen Modulen und/oder einer Batterie (8) verbunden zu werden;
**dadurch gekennzeichnet, dass**
die leitfähigen Platten (4) auf abnehmbare Weise an der Basis (1) so montiert sind, dass sie auf der Basis (1) positioniert und von ihr entfernt werden können;und
die elektrischen Verbinder (5) auf abnehmbare Weise an dem Deckel (2) so montiert sind, dass sie auf dem Deckel positioniert und von ihm entfernt werden können.

2. Modul (100) nach Anspruch 1, wobei die elektronische Komponente (3) auf abnehmbare Weise an dem Deckel (2) so montiert ist, dass sie in Bezug auf den Deckel montiert und demontiert werden kann.

3. Modul (100) nach Anspruch 1 oder 2, wobei die Basis (1) zwei Sitze (12) umfasst, die so gestaltet sind, dass sie die leitfähigen Platten (4) aufnehmen.

4. Modul (100) nach einem der vorstehenden Ansprüche, wobei die Kopplungsmittel (10, 20) zwischen der Basis und dem Deckel vom Einrasttyp sind.

5. Modul (100) nach Anspruch 4, wobei die Kopplungsmittel (10, 20) der Basis (1) und des Deckels (2) mindestens einen Sitz (11) und mindestens ein Seitenelement (21) umfassen; wobei das Seitenelement (21) so gestaltet ist, dass es auf abnehmbare Weise in den Sitz (11) eingesetzt wird.

6. Modul (100) nach Anspruch 5, wobei das Seitenelement (21) einen Haltezahn (21a) umfasst, der so gestaltet ist, dass er das Seitenelement (21) in dem Sitz (11) hält; wobei die Basis (1) eine Gegenfläche (13) umfasst, gegen die der Haltezahn (21a) in Eingriff steht.

7. Modul (100) nach einem der vorstehenden Ansprüche, wobei der Deckel (2) mindestens zwei Schäfte (22) umfasst; wobei jeder Schaft (20) ein Durchgangsloch zur Aufnahme der elektrischen Verbinder (5) umfasst.

8. Modul (100) nach einem der vorstehenden Ansprüche, wobei der Deckel (2) zwei Durchgangslöcher (25) umfasst, in die die elektrischen Kontakte (30) der elektrischen Komponente (3) so eingesteckt werden, dass die elektrischen Kontakte (30) mit den leitfähigen Platten (4) in Kontakt kommen.

9. Verfahren zur Montage eines Moduls zum Spielen für Kinder; wobei das Verfahren die folgenden Arbeitsschritte umfasst:
- Vorbereiten einer Basis (1), eines Deckels (2), zweier leitfähiger Platten (4), einer elektronischen Komponente (3) und zweier elektrischer Verbinder (5);
- Anordnen der leitfähigen Platten (4) auf der Basis (1);
- Einstecken der elektrischen Kontakte (30) der elektronischen Komponente (3) in die auf dem Deckel (2) herausgearbeiteten Löcher (25);
- Verbinden des Deckels (2) mit der Basis (1), so dass die elektrischen Kontakte (30) der elektronischen Komponente (3) mit den leitfähigen Platten (4) in Kontakt kommen; und
- Montieren der beiden elektrischen Verbinder (5) auf dem Deckel (2), so dass die elektrischen Kontakte (5) mit den leitfähigen Platten (4) elektrisch verbunden sind.

10. Spieleset (G), umfassend:
- mindestens ein Modul (100) nach einem der Ansprüche 1 bis 8;
- ein Spieltisch (6);
- Kopplungsmittel (7) zwischen mindestens einem Modul (100) und dem Spieltisch (6); und
- eine Batterie (8), mit der die elektrischen Verbinder (5) verbunden sind.

11. Spieleset (G) nach Anspruch 10, wobei die Kopplungsmittel (7) zwischen mindestens einem Modul (100) und dem Spieltisch (6) Folgendes umfassen:
- ein Loch (70), das auf der Basis (1) des Moduls herausgearbeitet ist; und
- einen Zapfen (71), der auf dem Spieltisch (6) vorgesehen ist und so gestaltet ist, dass er in das Loch (70) der Basis (1) eingesetzt werden kann.

## Revendications

1. Module (100) assemblable de jeu pour enfants comprenant :
- une base (1);
- un couvercle (2) comprenant des moyens de couplage (20) aptes à s'accoupler de manière réversible avec des moyens de couplage (10) de ladite base (1), de manière que le couvercle (2) peut être monté et démonté par rapport à la base (1) ;
- deux plaques conductives (4) interposées entre ladite base (1) et ledit couvercle (2) lorsque le couvercle est relié à la base (1);
- un composant électronique (3) muni de contacts électriques (30) qui peuvent être branchés aux dites plaques conductives (4);
- deux connecteurs électriques (5) destinés à être branchés électriquement aux dites plaques conductives (4); lesdits connecteurs électriques (5) étant aptes à être branchés à des modules supplémentaires et/ou à une batterie (8);
**caractérisé en ce que**
lesdites plaques conductives (4) sont montées de manière amovible sur ladite base (1) de manière à pouvoir les positionner et les ôter de la base (1) ; et
lesdits connecteurs électriques (5) sont montés de manière amovible sur ledit couvercle (2) de manière à pouvoir les positionner et les ôter du couvercle.

2. Module (100) selon la revendication 1, où ledit composant électronique (3) est monté de manière amovible sur ledit couvercle (2), de manière à pouvoir être monté et démonté par rapport au couvercle.

3. Module (100) selon la revendication 1 ou 2, où ladite base (1) comprend deux logements (12) configurés de manière à loger lesdites plaques conductives (4).

4. Module (100) selon l'une quelconque des revendications précédentes, où lesdits moyens de couplage (10, 20) entre la base et le couvercle sont du type à déclic élastique.

5. Module (100) selon la revendication 4, où lesdits moyens de couplage (10, 20) de la base (1) et du couvercle (2) comprennent au moins un logement (11) et au moins une ailette (21) ; ladite ailette (21) étant configurée de manière à s'insérer de manière amovible dans ledit logement (11).

6. Module (100) selon la revendication 5, où ladite ailette (21) comprend une dent de retenue (21a) configurée de manière à bloquer l'ailette (21) dans le logement (11) ; ladite base (1) comprenant une surface de butée (13) contre laquelle la dent de retenue (21a) s'engage.

7. Module (100) selon l'une quelconque des revendications précédentes, où ledit couvercle (2) comprend au moins deux tiges (22); chaque tige (20) comprenant un orifice passant pour loger lesdits connecteurs électriques (5).

8. Module (100) selon l'une quelconque des revendications précédentes, où ledit couvercle (2) comprend deux orifices (25) passants dans lesquels on enfile les contacts électriques (30) du composant électrique (3) de façon que lesdits contacts électriques (30) entrent en contact avec les plaques conductives (4).

9. Méthode pour l'assemblage d'un module de jeu pour enfants ; ladite méthode comprenant les phases opérationnelles suivantes:
- prédisposition d'une base (1), d'un couvercle (2), de deux plaques conductives (4), d'un composant électronique (3) et de deux connecteurs électriques (5);
- disposition des plaques conductives (4) sur la base (1);
- insertion des contacts électriques (30) du composant électronique (3) à l'intérieur d'orifices (25) réalisés sur le couvercle (2);
- connexion du couvercle (2) avec la base (1) de façon à ce que les contacts électriques (30) du composant électronique (3) entrent en contact avec les plaques conductives (4); et
- montage des deux connecteurs électriques (5) sur ledit couvercle (2) de façon à ce que les connecteurs électriques (5) se branchent électriquement aux dites plaques conductives (4).

10. Kit de jeux (G) comprenant:
- au moins un module (100) selon l'une quelconque des revendications de 1 à 8;
- une table de jeu (6);
- des moyens de connexion (7) entre au moins un module (100) et la table de jeu (6) ; et
- une batterie (8) à laquelle sont branchés les connecteurs électriques (5).

11. Kit de jeux (G) selon la revendication 10, où lesdits moyens de connexion (7) entre au moins un module (100) et la table de jeu (6) comprennent :
- un orifice (70) percé sur la base (1) du module ; et
- un pion (71) placé sur la table de jeu (6), pion configuré de manière à s'insérer dans l'orifice (70) de la base (1).
